# EUROPÄISCHE PATENTSCHRIFT

(11) **EP 0 995 575 B1**
(45) Veröffentlichungstag und Bekanntmachung des Hinweises auf die Patenterteilung: **24.07.2002**
(21) Anmeldenummer: 99118650.3
(22) Anmeldetag: 21.09.1999
(51) Int. Cl.: B29C 45/42, B29C 45/14

(54) **Kunstoff-Spritzgiessanlage**
Plastic injection moulding apparatus
Dispositif de moulage par injection de matière plastique

(30) Priorität: 21.10.1998 DE 19848420
(43) Veröffentlichungstag der Anmeldung: 26.04.2000
(73) Patentinhaber: HEKUMA GmbH, 85386 Eching (DE)
(72) Erfinder: Herbst, Richard, 85386 Eching (DE)
(74) Vertreter: Klingseisen, Franz, Dipl.-Ing.

(56) Entgegenhaltungen:
- EP-A- 0 341 111
- PATENT ABSTRACTS OF JAPAN vol. 13, no. 36 (M-790), 26. Januar 1989 (1989-01-26) & JP 63 247016 A (SAILOR PEN CO LTD), 13. Oktober 1988 (1988-10-13)
- PATENT ABSTRACTS OF JAPAN vol. 1997, no. 3, 31. März 1997 (1997-03-31) & JP 08 300425 A (FANUC LTD), 19. November 1996 (1996-11-19)
- PATENT ABSTRACTS OF JAPAN vol. 1996, no. 2, 29. Februar 1996 (1996-02-29) & JP 07 276447 A (MATSUI MFG CO), 24. Oktober 1995 (1995-10-24)

## Beschreibung

Die vorliegende Erfindung betrifft eine Kunststoff-Spritzgießanlage, mit einer Kunststoff-Spritzgießmaschine und mit einem Handlinggerät zum Zuführen und/oder Entnehmen von Werkstücken und/oder Zubehörteilen in die bzw. aus der Spritzgießmaschine, wobei das Handlinggerät beweglich an einem Führungsgestell befestigt ist und wobei das Führungsgestell mit der Spritzgießmaschine verkoppelt ist.

Die Erfindung betrifft darüber hinaus ein Verfahren zum Steuern einer Kunststoff-Spritzgießanlage, die eine Spritzgießmaschine und ein Handlinggerät umfaßt, wobei zumindest ein Greifwerkzeug des Handlinggerätes zum Zuführen und/oder Entnehmen von Werkstücken und/oder Zubehörteilen in einen Bereich der Spritzgießmaschine eingefahren wird und wobei das Handlinggerät zu diesem Zweck beweglich an einem mit der Spritzgießmaschine verkoppelten Führungsgestell befestigt ist.

Eine derartige Kunststoff-Spritzgießanlage sowie ein derartiges Verfahren sind bekannt.

Das Handlinggerät einer solchen Spritzgießanlage wird gegenüber dem Führungsgestell üblicherweise mit einem elektrisch-rotatorischen Antrieb oder auch pneumatisch bewegt. Die Verkopplung zwischen dem Führungsgestell und der Spritzgießmaschine geschieht üblicherweise dadurch, daß das Führungsgestell an einem Gestell oder Gehäuse der Kunststoff-Spritzgießmaschine fest angeschraubt oder sogar angeschweißt wird. Sinn einer solch starren Verbindung ist es, eine exakte Positionierung des Handlinggerätes gegenüber der Spritzgießmaschine zu gewährleisten.

Der Nachteil einer derartig starren Verbindung ist jedoch, daß sich Bewegungen der Spritzgießmaschine, insbesondere die ruckartigen Bewegungen beim öffnen und Schließen des schweren Formwerkzeugs aufgrund des Newton'schen Prinzips actio = reactio auf das Führungsgestell und von da auf das Handlinggerät übertragen. Dies führt zu Erschütterungen des Handlinggerätes, das hierdurch in seinem exakten Bewegungsablauf gestört werden kann.

Diesen Nachteil konnte man bei den bisher bekannten Kunststoff-Spritzgießanlagen angesichts ihrer Zykluszeiten und ihrer damit verbundenen Bewegungsgeschwindigkeiten und -toleranzen in Kauf nehmen. Zunehmend werden jedoch Spritzgießanlagen benötigt, die trotz höherer Produktionsgeschwindigkeiten zunehmend geringere Bewegungstoleranzen einhalten.

Um diese Anforderungen zu erfüllen, werden nach einem ebenfalls neuen Konzept zukünftig Handlinggeräte eingesetzt, deren Bewegung nicht mehr nur elektrisch-rotatorisch oder pneumatisch, sondern nunmehr mittels eines Linearmotors, d.h. eines elektrisch-translatorischen Antriebs gesteuert werden. Hierdurch werden erheblich schnellere und gleichzeitig genauere Bewegungen des Handlinggerätes möglich. Außerdem können so die bei einem elektrisch-rotatorischen Antrieb benötigten Getriebe und Wandler, wie Zahnstangen, Spindeln, Ritzel und/oder Zahnriemen usw., entfallen. Da diese Elemente zwangsläufig eine gewisse Elastizität bzw. ein gewisses Spiel beinhalten, vergrößern sie die Bewegungstoleranzen des gesamten Antriebsstranges. Die hieraus resultierenden Ungenauigkeiten werden durch die Verwendung eines Linearmotors im Antrieb des Handlinggerätes vermieden. Darüber hinaus entfällt so natürlich auch die Störanfälligkeit und der Verschleiß, der mit diesen Elementen verbunden ist.

Schwierigkeiten bereitet bei Verwendung eines Linearmotors jedoch, daß die höheren Geschwindigkeiten und Beschleunigungen des Handlinggerätes zwangsläufig zu höheren Bewegungsenergien und größeren Bewegungsimpulsen führen. Demzufolge verstärken sich die eingangs genannten Probleme nunmehr auch durch Erschütterungen, die umgekehrt von den Bewegungen des Handlinggerätes herrühren und auf die Kunststoff-Spritzgießmaschine übertragen werden. Dies gilt um so mehr, je geringer die Masse der Spritzgießmaschine ist.

Bei einer derzeit sich in der Entwicklung befindenden Kunststoff-Spritzgießanlage ist für den Antrieb des Handlinggerätes ein Linearmotor vorgesehen, dessen Masse ca. 70 kg beträgt. In Verbindung mit den angestrebten Beschleunigungen und Geschwindigkeiten des Handlinggerätes führt dies dazu, daß sich auf die Kunststoff-Spritzgießmaschine Lastwechsel mit Beschleunigungen von bis zum Fünffachen der Erdbeschleunigung (5 g) übertragen können. Dies führt zu starken Erschütterungen der Spritzgießmaschine, die hinsichtlich der relativen Positioniergenauigkeit zwischen Formwerkzeug und Handlinggerät über das hier tolerierbare Maß hinausgehen.

Es ist daher Aufgabe der vorliegenden Erfindung, eine Kunststoff-Spritzgießanlage der eingangs genannten Art anzugeben, bei der Erschütterungen der Spritzgießmaschine, die aus den Bewegungen des Handlinggerätes resultieren, vermindert sind. Gleichzeitig soll dabei jedoch nach wie vor eine exakte Positionierung der beiden Einheiten zueinander gewährleistet sein. Weiterhin ist es Aufgabe der Erfindung, ein dementsprechendes Verfahren der eingangs genannten Art anzugeben.

Diese Aufgabe wird bei der eingangs genannten Kunststoff-Spritzgießanlage erfindungsgemäß dadurch gelöst, daß das Führungsgestell in bezug auf die Spritzgießmaschine beweglich gelagert ist.

Die Aufgabe wird hinsichtlich des eingangs genannten Verfahrens erfindungsgemäß dadurch gelöst, daß das Führungsgestell in bezug auf die Spritzgießmaschine beweglich gelagert wird und daß das Führungsgestell in seinen Bewegungen in bezug auf die Spritzgießmaschine gebremst wird.

Die erfindungsgemäße Kunststoff-Spritzgießanlage besitzt den Vorteil, daß sich das Führungsgestell des Handlinggerätes zumindest innerhalb gewisser Grenzen gegenüber der Kunststoff-Spritzgießmaschine bewegen kann. Dies führt dazu, daß sich die Impulse, die das Führungsgestell aufgrund der Bewegungen des Handlinggerätes aufnimmt, wenn überhaupt, nur zu einem abgeschwächten Teil auf die Kunststoff-Spritzgießmaschine übertragen. Auf diese Weise werden die eingangs genannten Erschütterungen vermieden oder zumindest reduziert. Gleichzeitig sind das Führungsgestell und die Spritzgießmaschine jedoch wie bisher miteinander verkoppelt, so daß ihre gegenseitige Position auch im Arbeitsbetrieb der Spritzgießanlage erhalten bleibt.

Die Größe des Bewegungshubes, den das Führungsgestell in bezug auf die Spritzgießmaschine ausführen kann, hängt von den konstruktiven Gegebenheiten der Verbindung ab. Der erforderliche Bewegungshub richtet sich einerseits nach der Stärke der Lastwechsel, die durch die Bewegung des Handlinggerätes hervorgerufen werden, und andererseits nach der Stärke der Erschütterungen, die die Kunststoff-Spritzgießmaschine ohne Störungen ihres Bewegungsablaufes verkraften kann.

Gemäß dem erfindungsgemäßen Verfahren wird das Führungsgestell in seinen Bewegungen in bezug auf die Spritzgießmaschine gebremst. Dies kann einerseits durch die konstruktive Begrenzung des Bewegungshubes des Führungsgestells erreicht werden, andererseits jedoch auch durch eine in dieser Hinsicht optimierte Steuerung der Bewegungen des Handlinggerätes.

Aufgrund der erfindungsgemäßen Maßnahme sind die Lastwechsel, die das Führungsgestell durch die Bewegungen des Handlinggerätes erfährt, zumindest teilweise von der Kunststoff-Spritzgießmaschine entkoppelt. Dementsprechend werden die Impulse des Führungsgestells auf die Kunststoff-Spritzgießmaschine nur vermindert oder gar nicht übertragen. Die eingangs gestellte Aufgabe ist somit vollständig gelöst.

In einer Ausgestaltung der Erfindung ist das Führungsgestell gegenüber der Spritzgießmaschine mittels eines energieaufnehmenden Elements gedämpft gelagert.

Diese Maßnahme besitzt den Vorteil, daß zumindest ein Teil der Bewegungsenergie des Führungsgestells in dem Sinne vernichtet wird, daß sie der Spritzgießanlage entzogen wird. Dies kann beispielsweise dadurch geschehen, daß die Energie in dem energieaufnehmenden Element in Wärme umgewandelt wird, und zwar z.B. durch Reibung oder Verformung. Hierdurch wird sowohl der Bewegungshub des Führungsgestells als auch eine gegebenenfalls noch vorhandene Erschütterung der Kunststoff-Spritzgießmaschine vermindert. In bezug auf das erfindungsgemäße Verfahren ermöglicht diese Ausgestaltung, daß das Führungsgestell in seinen Bewegungen mit Hilfe des energieaufnehmenden Elements gebremst wird.

In einer Ausgestaltung der zuvor genannten Maßnahme ist die Dämpfung des energieaufnehmenden Elements variabel.

Diese Maßnahme besitzt den Vorteil, daß die Wirkung des energieaufnehmenden Elements an verschiedene Arbeitsabläufe und Betriebsbedingungen der Kunststoff-Spritzgießanlage angepaßt werden kann. Hierdurch ist eine stets optimale Steuerung der Betriebsabläufe möglich.

In einer weiteren Ausgestaltung der Erfindung besitzt das Führungsgestell in bezug auf die Spritzgießmaschine zumindest die gleichen Freiheitsgrade wie das Handlinggerät in bezug auf das Führungsgestell.

Diese Maßnahme besitzt den Vorteil, daß das Führungsgestell in bezug auf die Spritzgießmaschine zumindest die gleichen Bewegungen ausführen kann, wie das Handlinggerät in bezug auf das Führungsgestell. Hierdurch wird erreicht, daß die vorteilhafte Wirkung der Erfindung in allen Bewegungsrichtungen, in denen das Führungsgestell aufgrund der Bewegung des Handlinggerätes Impulse erfährt, ausgenutzt werden kann. Die Maßnahme besitzt somit den Vorteil, daß Erschütterungen der Kunststoff-Spritzgießmaschine in bezug auf sämtliche Bewegungsrichtungen des Handlinggerätes vermindert oder sogar beseitigt sind.

Gemäß einer weiteren Ausgestaltung der Erfindung verläuft die Bewegung des Handlinggerätes in etwa transversal zur Spritzgießmaschine.

Diese Maßnahme besitzt den Vorteil, daß das Handlinggerät beim Zuführen und/oder Entnehmen von Werkstücken und/oder Zubehörteilen in der Spritzgießmaschine nur relativ kurze Strecken zurückzulegen hat. Hierdurch läßt sich die Zykluszeit und damit die Produktionsleistung der gesamten Spritzgießanlage minimieren.

Gemäß einer weiteren Ausgestaltung der vorliegenden Erfindung ist die Bewegung des Führungsgestells in bezug auf die Spritzgießmaschine in etwa kollinear zu der Bewegung des Handlinggerätes.

Kollinear bedeutet hier im mathematischen Sinne, daß zwei Geraden, die gedanklich durch die Bewegungsachsen des Führungsgestells und des Handlinggerätes gelegt werden, parallel zueinander verlaufen oder sogar zusammenfallen. Die Maßnahme besitzt insbesondere in Kombination mit der zuvor genannten Maßnahme den Vorteil, daß die Bewegungen des Handlinggerätes in bezug auf das Führungsgestell in optimaler Weise von der Spritzgießmaschine entkoppelt sind. Dies führt dazu, wie bereits zuvor erläutert, daß die Erschütterungen der Kunststoff-Spritzgießmaschine, die aus Bewegungen des Handlinggerätes resultieren, in optimaler Weise vermindert oder sogar vermieden werden. Die kollineare Anordnung der Bewegungsachsen vermeidet darüber hinaus jedoch einen Einfluß auf eine Verkopplung senkrecht zu diesen Achsen. Hierdurch wird es möglich, das Führungsgestell in bezug auf die weiteren Bewegungsrichtungen, d.h. senkrecht zu den kollinearen Achsen, starr mit der Kunststoff-Spritzgießmaschine zu verkoppeln. Dadurch wird dann die Einhaltung der gegenseitigen Positionierung der Kunststoff-Spritzgießmaschine und des Handlinggerätes verbessert.

Besonders bevorzugt ist die zuletzt genannte Maßnahme in dem Fall, daß die beiden genannten Bewegungsachsen zusammenfallen, d.h. daß die beiden genannten Bewegungen gleichachsig gerichtet sind. Hierdurch werden in vorteilhafter Weise auch Drehmomente, die ansonsten aufgrund einer Hebelwirkung entstehen können, vermieden.

In einer weiteren Ausgestaltung der zuvor genannten Maßnahmen ist die Bewegung des Führungsgestells in bezug auf die Spritzgießmaschine jeweils entgegengesetzt zu der Bewegung des Handlinggerätes in bezug auf das Führungsgestell.

Diese Maßnahme besitzt den Vorteil, daß die Beweglichkeit des Führungsgestells in bezug auf die Spritzgießmaschine optimal an die Bewegungen des Handlinggerätes in bezug auf das Führungsgegestell angepaßt ist, um Erschütterungen der Kunststoff-Spritzgießmaschine zu verhindern bzw. zu verringern, da die entgegengesetzte Beweglichkeit gerade dem Newton'schen Prinzip actio = reactio Rechnung trägt.

In einer besonders bevorzugten Ausgestaltung der Erfindung ist das Führungsgestell in bezug auf die Spritzgießmaschine reibschlüssig gelagert.

Diese Maßnahme stellt eine Weiterbildung der ersten Ausgestaltung der Erfindung dar, nach der das Führungsgestell gegenüber der Spritzgießmaschine mittels eines energieaufnehmenden Elements gedämpft gelagert ist. Die dort beschriebenen vorteilhaften Wirkungen dieses Elements werden demnach hier durch einen Reibschluß erreicht. Diese Maßnahme besitzt den Vorteil, daß ein solcher Reibschluß eine hohe Energieaufnahme ermöglicht und somit zu einer wirkungsvollen Reduzierung der Bewegungsenergie des Führungsgestells beiträgt. Darüber hinaus besitzt ein Reibschluß den Vorteil, daß er keine elastische und somit schwingungsanfällige Komponente besitzt. Hierdurch wird das Entstehen von Schwingungen des Führungsgestells gegenüber der Kunststoff-Spritzgießmaschine zuverlässig verhindert.

In einer weiteren Ausgestaltung der zuvor genannten Maßnahme ist der Reibschluß lösbar.

Diese Maßnahme besitzt den Vorteil, daß das Führungsgestell bei jedem neuen Einrichten der Spritzgießanlage oder sogar zu Beginn jeder neuen Bewegung des Handlinggerätes auf einfach Weise neu positioniert und justiert werden kann, ohne dabei die in diesem Fall dann unnötigen Reibungskräfte des Reibschlusses zu überwinden.

In einer alternativen Ausgestaltung der zuvor genannten Maßnahmen ist das Führungsgestell in bezug auf die Spritzgießmaschine mit einem Stoßdämpfer abgestützt.

Diese Maßnahme besitzt den Vorteil, daß ein Stoßdämpfer einem geringeren Verschleiß unterliegt als eine reibschlüssige Kopplung. Darüber hinaus bietet ein Stoßdämpfer zumindest grundsätzlich die Möglichkeit, in Umkehrung seiner eigentlichen Funktion zusätzlich auch als Hydraulikzylinder zum Einstellen der Position des Führungsgestells in bezug auf die Kunststoff-Spritzgießmaschine verwendet zu werden.

In diesem Zusammenhang sei angemerkt, daß unter dem Begriff Stoßdämpfer hier jegliche konstruktive Ausführung von Stoßdämpfern verstanden wird, wie beispielsweise Stoßdämpfer, deren Kolben hydraulisch oder pneumatisch gedämpft sind. Alternativ kann es sich hierbei jedoch auch um einen Stoßdämpfer handeln, bei dem eine Hydraulikflüssigkeit über schaltbare Ventile umgeladen wird oder bei dem eine Dämpfung allein durch die Bewegung eines Kolben oder Schiebers in einer viskosen Flüssigkeit erreicht wird. Auch elektrische Stoßdämpfer, die beispielsweise einen Stoß durch die Kraftwirkung eines Magnetfeldes dämpfen, fallen hierunter.

In einer weiteren Ausgestaltung der zuvor genannten Maßnahme ist der Stoßdämpfer mit Verstellmitteln verbunden, mittels denen die Position seines Kolbens verstellbar ist.

Diese Maßnahme knüpft an den bereits zuvor angedeuteten Gedanken an und besitzt den Vorteil, daß der Stoßdämpfer in Umkehrung seiner Funktion auch dazu verwendet werden kann, die Position des Führungsgestells gegenüber der Kunststoff-Spritzgießmaschine einzustellen, d.h. wenn nötig zu korrigieren. Hierdurch werden der konstruktive Aufwand sowie die mit ihm verbundenen Kosten bei einer erfindungsgemäßen Spritzgießanlage verringert, während gleichzeitig eine exakte Positionierung zwischen der Spritzgießmaschine und dem Handlinggerät gewährleistet werden kann.

In einer weiteren Ausgestaltung der Erfindung weist die Spritzgießanlage eine Justiervorrichtung zum Einstellen der Position des Führungsgestells in bezug auf die Spritzgießmaschine auf.

Diese Maßnahme knüpft an die zuvor genannte Maßnahme insoweit an, als daß der verstellbare Stoßdämpfer bzw. sein Kolben dort auch Bestandteil der Justiervorrichtung sein kann. Die Maßnahme ist jedoch auch in allgemeiner Form in Kombination mit den anderen Ausgestaltungen der Erfindung vorteilhaft, da es hierdurch generell möglich ist, die Position des Führungsgestells gegenüber der Kunststoff-Spritzgießmaschine zu korrigieren, wenn diese sich aufgrund der beweglichen Lagerung im Verlauf des Arbeitsbetriebs der Spritzgießanlage verändert hat. Die Maßnahme bietet somit den Vorteil, daß trotz der beweglichen Lagerung des Führungsgestells in bezug auf die Spritzgießmaschine deren exakte Position zueinander sichergestellt werden kann. Dies ist insbesondere im Hinblick auf die Genauigkeit der Einfahr- und Ausfahrbewegungen des Handlinggerätes in den Bereich der Spritzgießmaschine von Bedeutung.

In einer bevorzugten Ausgestaltung des erfindungsgemäßen Verfahrens wird das Führungsgestell nach einem Durchlauf eines Bewegungszyklus des Handlinggerätes mittels der Justiervorrichtung in bezug auf die Spritzgießmaschine neu positioniert.

Der Bewegungszyklus kann dabei sowohl den gesamten Bewegungsvorgang des Handlinggerätes einschließen als auch nur Abschnitte dieser Gesamtbewegung, wie beispielsweise das Einfahren in die Spritzgießmaschine, betreffen. Die Maßnahme besitzt den Vorteil, daß das Handlinggerät zu Beginn des neuen Bewegungszyklus von einer definierten Ausgangsposition startet. Dadurch wird erreicht, daß die Bewegungen des Handlinggerätes in bezug auf die Spritzgießmaschine auch im Verlauf des Arbeitsbetriebs der gesamten Anlage innerhalb enger Toleranzen erhalten bleiben. Je öfter das Führungsgestell im Arbeitsbetrieb der Anlage justiert wird, desto höher ist die erreichte Genauigkeit.

In einer bevorzugten Ausgestaltung der zuvor genannten konstruktiven Maßnahme beinhaltet die Justiervorrichtung einen Anschlag, der starr mit dem Führungsgestell verbunden ist und an dem zumindest ein in einer definierten Position angeordnetes kraftübertragendes Element angreift.

Diese Maßnahme besitzt den Vorteil, daß hierdurch eine exakte Positionierung des Führungsgestells auf einfache und damit ausgesprochen kostengünstige Weise ermöglicht wird.

In einer weiteren Ausgestaltung der Erfindung weist die Spritzgießanlage Meßmittel zum Bestimmen der jeweils aktuellen relativen Position des Handlinggerätes und der Spritzgießmaschine zueinander auf.

In einer Ausgestaltung des erfindungsgemäßen Verfahrens wird die Ein- und Ausfahrbewegung des Handlinggerätes in Abhängigkeit der bestimmten aktuellen relativen Position des Handlinggerätes und der Spritzgießmaschine zueinander gesteuert.

Anschaulich gesprochen wird hier also auf eine Veränderung der relativen Position allein mit einer entsprechenden Steuerung des Handlinggerätes reagiert. Diese Maßnahmen besitzen somit den Vorteil, daß hierdurch auf eine hardwaremäßige Korrektur der relativen Position verzichtet werden kann, ohne eine Degradation der Genauigkeit der Ein- und Ausfahrbewegung in Kauf zu nehmen. Dies erspart den mit einer hardwaremäßigen Korrektur verbundenen Zeit- und Kostenaufwand.

In einer weiteren Ausgestaltung der Erfindung ist das Führungsgestell beweglich an einem Tragegestell befestigt, und das Tragegestell ist starr mit der Spritzgießmaschine verkoppelt.

Diese Maßnahme besitzt den Vorteil, daß das Handlinggerät so einerseits einen Bestandteil aufweist, der stets mit der Spritzgießmaschine starr verkoppelt ist, während es andererseits trotzdem in bezug auf die Spritzgießmaschine beweglich gelagert ist. Hierdurch wird die Einhaltung der relativen Position des Handlinggerätes in bezug auf die Spritzgießmaschine verbessert. Des weiteren besitzt die Maßnahme den Vorteil, daß das energieaufnehmende Element so sehr gut zwischen dem Tragegestell und dem Führungsgestell angeordnet werden kann. Dies erleichtert die Konstruktion und Montage der gesamten Anlage.

In einer weiteren Ausgestaltung der Erfindung liegt ein Bewegungshub des Führungsgestells in bezug auf die Spritzgießmaschine im Bereich zwischen 5 und 50 mm, bevorzugt im Bereich zwischen 10 bis 30 mm.

Diese Maßnahme besitzt den Vorteil, daß der Bewegungshub des Führungsgestells nicht unnötig groß bemessen ist, was einerseits entsprechenden Platzbedarf erfordern würde und andererseits eine Neueinstellung der jeweils exakten Ausgangsposition des Führungsgestells unnötig erschwert. Andererseits sind die in den angegebenen Grenzen liegenden Bewegungshübe ausreichend, um die im Betrieb der erfindungsgemäßen Kunststoff-Spritzgießanlage auftretenden Erschütterungen auf ein akzeptables Maß zu reduzieren. Die genannten Bereiche sind insbesondere vorteilhaft bei einer Kunststoff-Spritzgießanlage, bei der das Handlinggerät mittels eines Linearmotors bewegt wird, da sie in etwa dem Versatz des Führungsgestells entsprechen, den dieses aufgrund der Beschleunigungen des Linearmotors erfährt.

In einer weiteren Ausgestaltung der Erfindung, die aber auch in anderem Zusammenhang einsetzbar ist, weist das Handlinggerät einen Antrieb auf, der einen Linearmotor umfaßt.

Diese Maßnahme besitzt für sich genommen den Vorteil, daß das Handlinggerät mit Hilfe des Linearmotors einerseits wesentlich schneller als mit bisher bekannten Antrieben und andererseits trotzdem sehr exakt in bezug auf die Spritzgießmaschine steuerbar ist. Des weiteren entfallen dadurch Kupplungen und Getriebe, die bei den bisher verwendeten elektrisch-rotatorischen Antrieben benötigt wurden. Das Handlinggerät ist dadurch weniger störanfällig und verschleißärmer. In Kombination mit den zuvor genannten Ausgestaltungen der Erfindung besitzt die Maßnahme den Vorteil, daß die bereits genannten vorteilhaften Wirkungen der Erfindung hier besonders deutlich zum Tragen kommen. Dies resultiert, wie bereits erwähnt, aus den stärkeren Bewegungsimpulsen, die sich bei der Verwendung eines Linearmotors im Antrieb des Handlinggerätes ergeben.

In einer weiteren Ausgestaltung der Erfindung, die ebenfalls auch für sich genommen einsetzbar ist, ist das Handlinggerät mit einem deformierbaren Stoßaufnahmeelement versehen.

Ein solches Element wird in der Kraftfahrzeugindustrie häufig auch als Stoßfänger oder auch als sogenannter Pralltopf bezeichnet. Dieses Element dient dazu, im Fall einer Störung oder eines Ausfalls der Steuerung der Anlage die Schäden zu minimieren, die durch eine Kollision des Handlinggerätes mit der Spritzgießmaschine entstehen können. Bei der Verwendung eines Linearmotors als Antrieb des Handlinggerätes wird dieses beispielsweise mit bis zu 5 m/s bewegt. Wenn das Handlinggerät bei diesen hohen Geschwindigkeiten aufgrund einer Störung nicht rechtzeitig abgebremst werden kann, so ergeben sich aufgrund der hohen kinetischen Energie starke Beschädigungen, insbesondere an dem Handlinggerät selbst. Die genannte Maßnahme besitzt den Vorteil, daß hierdurch die in einem solchen Fall notwendigen Reparaturkosten verringert werden.

Ein derartiger Pralltopf wird vorteilhafterweise sowohl auf der Vorderseite als auch auf der Rückseite des Handlinggerätes angeordnet. Der Pralltopf an der Vorderseite des Handlinggerätes dient dazu, eine Kollision zwischen dem Handlinggerät und der Spritzgießmaschine und die daraus resultierenden Beschädigungen an den entsprechenden Werkzeugen zu verhindern. In einer besonders bevorzugten Ausgestaltung werden die Werkzeughälften der Spritzgießmaschine mit einer Kulisse umgeben, an der der Pralltopf im Fall einer Kollision aufschlägt. Hierdurch werden auch die Werkzeughälften der Kunststoff-Spritzgießmaschine gegen Beschädigungen im Fall einer Kollision geschützt. Bei einer Spritzgießmaschine mit einem Etagenwerkzeug wird eine derartige Kulisse vorteilhafterweise an sämtlichen Werkzeughälften angeordnet, um so auch eine Beschädigung der Werkzeughälften zu verhindern, wenn diese aufgrund einer Störung weiter auseinanderfahren, als dies im Normalfall vorgesehen ist.

Der Pralltopf an der Rückseite des Handlinggerätes dient dazu, dieses auch dann mit geringstmöglichen Beschädigungen abzufangen, wenn die üblicherweise verwendete Betriebsbremse des Handlinggerätes aufgrund einer Störung ausfällt. Eine Alternative oder Ergänzung zu diesem Pralltopf an der Rückseite des Handlinggerätes wäre eine zusätzliche mechanische Bremse, die durch eine Vorspannung so eingestellt ist, daß sie bei Ausfall der Versorgungsspannung automatisch ihre Bremswirkung entfaltet. Eine derartige mechanische Notfallbremse benötigt jedoch bei einem Handlinggerät, das mit bis zu 5 m/s bewegt wird, ca. 250 mm Bremsweg.

Dieser zusätzlich zu berücksichtigende Bremsweg kann durch die Verwendung eines Pralltopfes um das Fünf- bis Zehnfache verkürzt werden, so daß er nur noch 25 bis 50 mm beträgt. Dies ist möglich, da ein Pralltopf durch seine Verformung wesentlich höhere kinetische Energie aufnehmen kann, als eine reibschlüssige mechanische Bremse. Durch die Verwendung eines Pralltopfes an der Rückseite des Handlinggerätes ist es somit möglich, den Auslauf- bzw. Bremsweg beim Herausfahren des Handlinggerätes aus der Spritzgießmaschine den konstruktiven Rahmenbedingungen anzupassen. Gleichzeitig wird das Unfallrisiko, das durch einen im Störfall nahezu ungebremst über das Führungsgestell nach hinten hinaus schießenden Antrieb hervorgerufen wird, wesentlich reduziert.

Es versteht sich, daß die vorstehend genannten und die nachfolgend noch zu erläuternden Merkmale und Maßnahmen nicht nur in der jeweils angegebenen Kombination, sondern auch in anderen Kombinationen oder in Alleinstellung verwendbar sind, ohne den Rahmen der vorliegenden Erfindung zu verlassen.

Nachfolgend werden Ausführungsbeispiele der Erfindung anhand einer Zeichnung dargestellt und erläutert. Es zeigen:
- Fig. 1: eine schematische Darstellung eines bevorzugten Ausführungsbeispiels einer erfindungsgemäßen Kunststoff-Spritzgießanlage in einer Seitenansicht,
- Fig. 2: eine Detailansicht des Ausführungsbeispiels aus Fig. 1 entlang der Schnittlinie II-II,
- Fig. 3: eine weitere Detailansicht des Ausführungsbeispiels aus Fig. 1 entlang der Schnittlinie III-III und
- Fig. 4: ein weiteres Ausführungsbeispiel der erfindungsgemäßen Kunststoff-Spritzgießanlage in einer schematischen Seitenansicht.

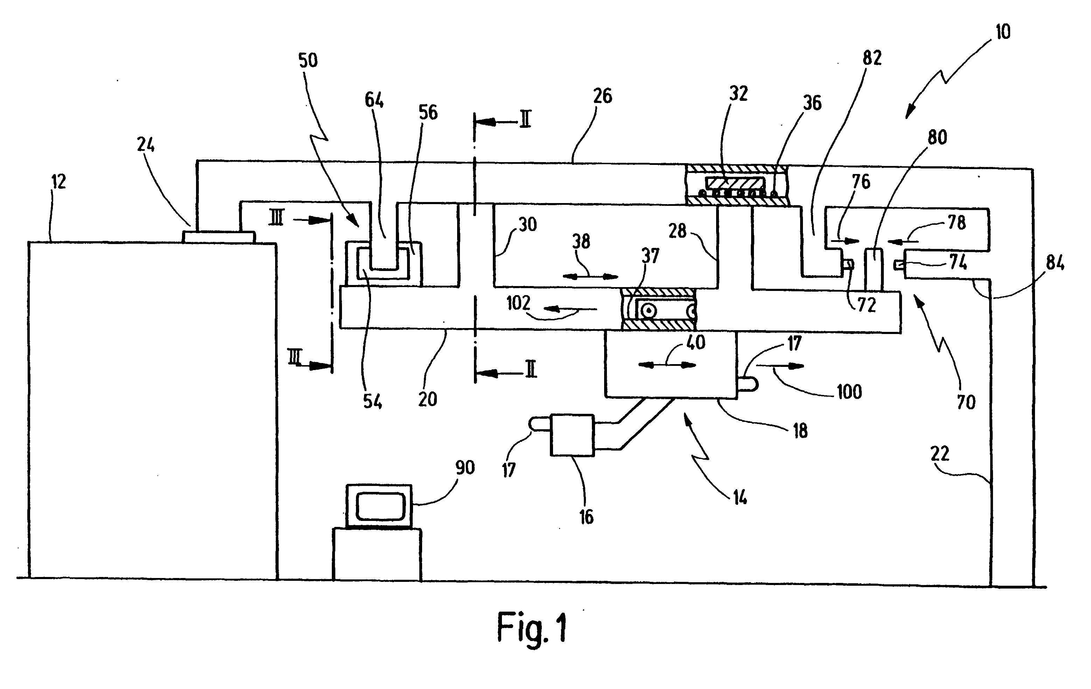

In der Fig. 1 ist eine erfindungsgemäßen Kunststoff-Spritzgießanlage in ihrer Gesamtheit mit der Bezugsziffer 10 bezeichnet.

Die Spritzgießanlage 10 umfaßt eine Spritzgießmaschine 12 sowie ein Handlinggerät 14 zum Zuführen und/oder Entnehmen von hier nicht dargestellten Werkstücken und/oder Zubehörteilen in die bzw. aus der Spritzgießmaschine 12. Das Handlinggerät 14 weist ein Greifwerkzeug 16, an dessen Vorder- und Rückseite je ein Pralltopf 17 montiert ist, sowie einen Antrieb 18 auf. Der Antrieb 18 umfaßt in diesem bevorzugten Ausführungsbeispiel einen Linearmotor, ohne daß die Erfindung jedoch generell auf diese Ausführung beschränkt ist. Alternativ kann der Antrieb 18 des Handlinggerätes 14 auch über elektrisch-rotatorische oder pneumatische Verstellmittel erfolgen.

Der Antrieb 18 ist hier beweglich an einem Führungsgestell 20 befestigt, das wiederum seinerseits beweglich mit einem Tragegestell 22 verbunden ist. Das Tragegestell 22 ist über eine Verbindung 24 fest mit einem Gehäuse bzw. einem Gestell der Spritzgießmaschine 12 verkoppelt.

Das Tragegestell 22 weist einen oberen Querträger 26 auf, in den zwei Tragarme 28, 30 des Führungsgestells 20 beweglich eingehängt sind.

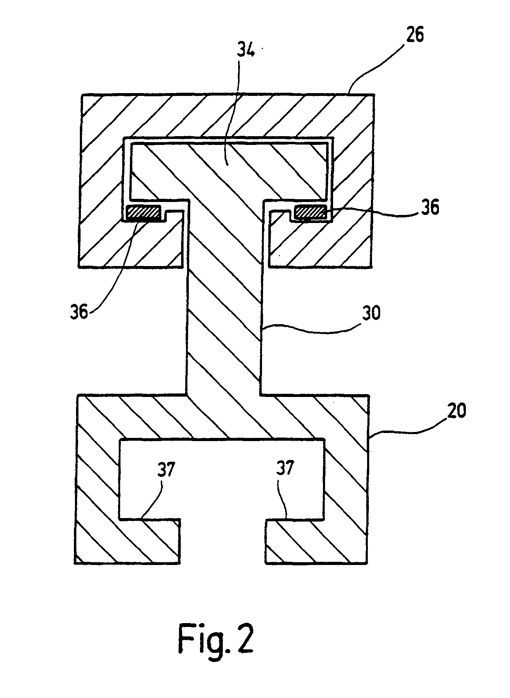

Wie anhand der teilweise aufgeschnittenen Darstellung des Querträgers 26 in Fig. 1 sowie in Fig. 2 zu erkennen ist, sind die oberen Enden 32, 34 der Tragarme 28, 30 T-förmig geformt und laufen auf Rollen 36 innerhalb des entsprechend angepaßten Querträgers 26.

Wie weiterhin anhand der Darstellung in Fig. 2 sowie der ebenfalls teilweise aufgeschnittenen Ansicht des Führungsgestells 20 in Fig. 1 zu erkennen ist, besitzt das Führungsgestell 20 ebenfalls ein T-förmig ausgeschnittenes Hohlprofil, auf dessen Laufflächen 37 der Antrieb 18 des Handlinggerätes 14 gelagert ist.

Das Führungsgestell 20 ist in Richtung des Pfeils 38 beweglich in bezug auf das Tragegestell 22 gelagert, und das Handlinggerät 14 ist in Richtung des Pfeils 40 beweglich in bezug auf das Führungsgestell 20 gelagert.

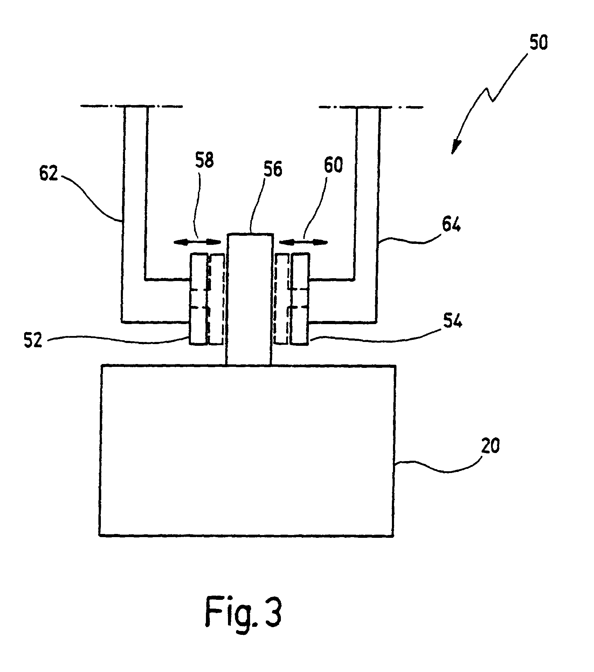

Mit der Bezugsziffer 50 ist in seiner Gesamtheit ein energieaufnehmendes Element bezeichnet, das, wie in Fig. 3 dargestellt, zwei Bremsbacken 52 und 54 umfaßt, die mit einer Reibfläche 56 zusammenwirken. Die Reibfläche 56 ist fest mit dem Führungsgestell 20 verbunden. Die Bremsbacken 52 und 54 sind demgegenüber in Richtung der Pfeile 58, 60 beweglich an Halterungen 62, 64 des Tragegestells 22 befestigt.

Die Bremsbacken 52, 54 sind im vorliegenden Ausführungsbeispiel hydraulisch betätigbar, so daß die Bremskraft und damit der Reibschluß an der Reibfläche 56 veränderbar ist. Der Bewegungshub der Bremsbacken 52, 54 ist so groß, daß der Reibschluß mit der Reibfläche 56 vollständig lösbar ist.

Mit dem Bezugszeichen 70 ist seiner Gesamtheit eine Justiervorrichtung bezeichnet. Die Justiervorrichtung 70 umfaßt hier zwei Kolben 72, 74, die einander gegenüberliegend und in Richtung der Pfeile 76 bzw. 78 bewegbar angeordnet sind. Zwischen den beiden Kolben 72, 74 befindet sich ein Anschlag 80, der fest mit dem Führungsgestell 20 verbunden ist. Wie in der Fig. 1 erkennbar, sind die Kolben 72, 74 hier in Halterungen 82, 84 gelagert, die mit dem Tragegestell 22 verbunden sind. Die Kolben 72, 74 befinden sich in einer definierten Position in bezug auf den Anschlag 80.

Durch eine Betätigung der Kolben 72 und 74, beispielsweise mit Hilfe eines an sich bekannten hydraulischen Mechanismus, wird auf den Anschlag 80 eine Kraft übertragen, die zur Folge hat, daß der Anschlag 80 zwischen den Kolben 72 und 74 zentriert wird. Hierdurch wird das Führungsgestell 20 in eine definierte Position gegenüber dem Tragegestell 22 und damit gegenüber der Kunststoff-Spritzgießmaschine 12 gebracht.

Mit der Bezugsziffer 90 ist des weiteren eine Steuereinheit bezeichnet, die zur Steuerung der gesamten Kunststoff-Spritzgießanlage 10 dient. Hierzu ist die Steuereinheit 90 in bekannter Weise mit dem Handlinggerät 14 und der Spritzgießmaschine 12 verbunden. Diese Verbindungen sind aus Gründen der Übersichtlichkeit jedoch hier nicht dargestellt. Darüber hinaus übernimmt die Steuereinheit 90 auch die Steuerung des energieaufnehmenden Elementes 50 sowie der Justiervorrichtung 70.

Im Betrieb der Spritzgießanlage 10 werden mit Hilfe der Spritzgießmaschine 12 in an sich bekannter Weise hier nicht dargestellte Werkstücke hergestellt. Zur Entnahme der Werkstücke aus der Spritzgießmaschine 12 fährt das Greifwerkzeug 16 des Handlinggerätes 14 unter Steuerung der Steuereinheit 90 in einen Bereich der Spritzgießmaschine 12 ein. Dort werden die hergestellten Werkstücke mit Hilfe des Greifwerkzeugs 16 aufgenommen und von dem Handlinggerät 14 zu einer weiteren Verarbeitung außerhalb der Spritzgießmaschine 12 transportiert.

Im vorliegenden Beispiel deutet der Pfeil 100 die Ausfahrbewegung des Handlinggerätes 14 aus der Spritzgießmaschine 12 an. Die Bewegung des Handlinggerätes 14 in Richtung des Pfeils 100 erzeugt eine Gegenkraft auf das Führungsgestell 20 in Richtung des Pfeils 102. Je stärker die Beschleunigung des Handlinggerätes 14 ist, desto stärker ist der Impuls, den das Führungsgestell 20 in Richtung des Pfeils 102 erfährt.

Ohne die erfindungsgemäße Maßnahme würde dieser Impuls nahezu ungedämpft auf die Spritzgießmaschine 12 übertragen. Hierdurch würden Erschütterungen hervorgerufen, die den Bewegungsablauf der Spritzgießmaschine 12 stören können.

Dem erfindungsgemäßen Verfahren entsprechend werden bei diesem Ausführungsbeispiel jedoch die Bremsbacken 52, 54 in eine derartige Anlage an die Reibfläche 56 gebracht, daß sich das Führungsgestell 20 gerade eben noch gegenüber dem Tragegestell 22 und damit gegenüber der Spritzgießmaschine 12 bewegen kann. Die Bewegung des Führungsgestells 20 aufgrund des Impulses in Richtung des Pfeils 102 wird nun jedoch durch den Reibschluß zwischen den Bremsbacken 52, 54 und der Reibfläche 56 abgebremst. Die Bewegungsenergie des Führungsgestells 20 wird so im Wärmeenergie umgewandelt. Hierdurch werden der Impuls auf die Spritzgießmaschine 12 und die daraus folgenden Erschütterungen reduziert.

Nachdem das Handlinggerät seinen Bewegungszyklus durchlaufen hat, sei es einen vollständigen Zyklus zum Entnehmen eines hergestellten Werkstücks oder beispielsweise wenn es die Einfahrbewegung in die Spritzgießmaschine beendet hat, werden die Bremsbacken 52, 54 von der Reibfläche 56 gelöst. Hierdurch ist das Führungsgestell 20 gegenüber dem Tragegestell 22 frei beweglich. Sodann wird das Führungsgestell 20 mit Hilfe der Justiervorrichtung 70 in eine definierte Position gegenüber dem Tragegestell 22 und damit gegenüber der Spritzgießmaschine 12 gebracht. Dies geschieht im vorliegenden Ausführungsbeispiel allein dadurch, daß die Kolben 72 und 74 den Anschlag 80 zwischen sich zentrieren. In einem alternativen, hier nicht dargestellten Ausführungsbeispiel erfolgt die Justierung über einen konischen Indexpin, der in eine entsprechende konische Bohrung eingeschoben wird. Nach der Justierung des Führungsgestells 20 werden die Bremsbacken 52, 54 erneut in Anlage an die Reibfläche 56 gebracht. Sodann kann das Handlinggerät 14 erneut aus einer definierten Position seinen Bewegungszyklus zur Entnahme eines hergestellten Werkstückes aus der Spritzgießmaschine 12 beginnen.

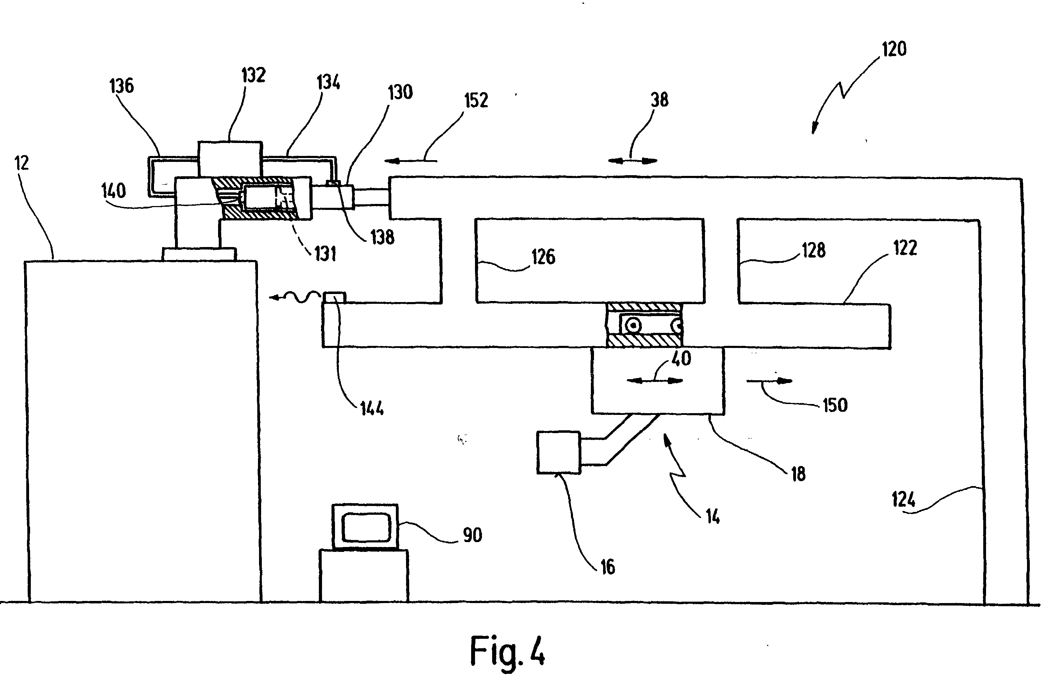

In Fig. 4 ist ein alternatives Ausführungsbeispiel der erfindungsgemäßen Kunststoff-Spritzgießanlage in seiner Gesamtheit mit der Bezugsziffer 120 bezeichnet. Hierbei bezeichnen gleiche Bezugszeichen dieselben Elemente wie bei dem Ausführungsbeispiel in Fig. 1.

Die Spritzgießanlage 120 unterscheidet sich von der zuvor dargestellten Spritzgießanlage 10 vor allem dadurch, daß das Führungsgestell 122 hier fest mit dem Tragegestell 124 über Tragarme 126 und 128 verbunden ist. Das Führungsgestell 122 und das Tragegestell 124 bilden hier insofern eine Einheit, so daß hier nachfolgend nur noch auf das Führungsgestell 122 Bezug genommen wird.

Die Kunststoff-Spritzgießanlage 120 besitzt als energieaufnehmendes Element im Unterschied zum vorhergehenden Ausführungsbeispiel einen Stoßdämpfer 130. Der Stoßdämpfer 130 ist mit seinem feststehenden Zylinder an der Spritzgießmaschine 12 befestigt. Der beweglich Kolben 131 ist demgegenüber mit dem Führungsgestell 122 verbunden. Hierdurch ist das Führungsgestell 122 wiederum beweglich in bezug auf die Kunststoff-Spritzgießmaschine 12 gelagert.

Mit der Bezugsziffer 132 ist eine Pumpe bezeichnet, die über Leitungen 134, 136 sowie schaltbare Ventile 138, 140 mit jeder der beiden Kammern des Stoßdämpfers 130 vor bzw. hinter dem Kolben 131 verbunden ist. Hierdurch ist es möglich, die beiden Kammern des Stoßdämpfers 130 unterschiedlich stark mit Druckmittel zu füllen.

Mit der Bezugsziffer 144 ist ein Sensor bezeichnet, der zum Bestimmen der Position des Führungsgestells 122 in bezug auf die Spritzgießmaschine 12 dient. In dem dargestellten Ausführungsbeispiel ist der Sensor 144 ein Ultraschall-Entfernungssensor. Alternativ kann hier jedoch auch jedes andere Meßmittel verwendet werden, mit dem eine Bestimmung der Position des Führungsgestells 122 in bezug auf die Spritzgießmaschine 12 möglich ist.

Bei der Spritzgießanlage 120 bildet der Sensor 144 in Verbindung mit der Verstellmöglichkeit des Kolbens 131 des Stoßdämpfers 130 die Justiervorrichtung zum Einstellen einer definierten Position des Führungsgestells 122.

Nimmt man, wie im vorhergehenden Ausführungsbeispiel, an, daß das Handlinggerät 14 in Richtung des Pfeils 150 bewegt wird, so erfährt das Führungsgestell 122 einen Bewegungsimpuls in Richtung des Pfeils 152. Dieser Bewegungsimpuls wird über den Stoßdämpfer 130 abgebremst und somit nur vermindert auf die Spritzgießmaschine 12 übertragen. Im Anschluß an die Bewegung des Handlinggerätes 14 bestimmt die Steuereinheit 90 mit Hilfe des Sensors 144 die Position des Führungsgestells 122 in bezug auf die Spritzgießmaschine 12. Wenn diese sich infolge des Bewegungsimpulses in Richtung des Pfeils 152 verändert hat, korrigiert die Steuereinheit 90 mit Hilfe der Pumpe 132, der steuerbaren Ventile 138, 140 sowie des Kolbens 131 des Stoßdämpfers 130 in Umkehrung dessen Funktion die Position des Führungsgestells 122.

In einem weiteren Ausführungsbeispiel des erfindungsgemäßen Verfahrens wird auf eine hardwaremäßige Korrektur der Position des Führungsgestells 122 vezichtet. Im Gegensatz dazu wird in der Steuereinheit 90 mit Hilfe des Sensors 144 die aktuelle relative Position des Führungsgestells 122 in bezug auf die Spritzgießmaschine 12 bestimmt. Diese aktuell bestimmte Position wird sodann verwendet, um die Ein- und Ausfahrbewegung des Handlinggerätes 14 in die Spritzgießmaschine 12 zu steuern.

## Patentansprüche

1. Kunststoff-Spritzgießanlage, mit einer Kunststoff-Spritzgießmaschine (12) und mit einem Handlinggerät (14) zum Zuführen und/oder Entnehmen von Werkstücken und/oder Zubehörteilen in die bzw. aus der Spritzgießmaschine (12), wobei das Handlinggerät (14) beweglich an einem Führungsgestell (20; 122) befestigt ist und wobei das Führungsgestell (20; 122) mit der Spritzgießmaschine (12) verkoppelt ist, **dadurch gekennzeichnet, daß** das Führungsgestell (20; 122) in bezug auf die Spritzgießmaschine (12) beweglich gelagert ist.

2. Spritzgießanlage nach Anspruch 1, **dadurch gekennzeichnet, daß** das Führungsgestell (20; 122) gegenüber der Spritzgießmaschine (12) mittels eines energieaufnehmenden Elements (50; 130) gedämpft gelagert ist.

3. Spritzgießanlage nach Anspruch 2, **dadurch gekennzeichnet, daß** die Dämpfung des energieaufnehmenden Elements (50; 130) variabel ist (58, 60; 132, 138, 140).

4. Spritzgießanlage nach einem der Ansprüche 1 bis 3, **dadurch gekennzeichnet, daß** das Führungsgestell (20; 122) in bezug auf die Spritzgießmaschine (12) zumindest die gleichen Freiheitsgrade (38, 40, 100, 102; 150, 152) besitzt wie das Handlinggerät (14) in bezug auf das Führungsgestell (20; 122).

5. Spritzgießanlage nach einem der Ansprüche 1 bis 4, **dadurch gekennzeichnet, daß** die Bewegung (40, 100; 150) des Handlinggerätes (14) in etwa transversal zur Spritzgießmaschine (12) verläuft.

6. Spritzgießanlage nach einem der Ansprüche 1 bis 5, **dadurch gekennzeichnet, daß** die Bewegung (38, 102; 152) des Führungsgestells (20; 122) in bezug auf die Spritzgießmaschine (12) in etwa kollinear zu der Bewegung des Handlinggerätes (14) ist.

7. Spritzgießanlage nach Anspruch 6, **dadurch gekennzeichnet, daß** die Bewegung (38, 102; 152) des Führungsgestells (20; 122) in bezug auf die Spritzgießmaschine (12) gleichachsig zu der Bewegung des Handlinggerätes (14) ist.

8. Spritzgießanlage nach Anspruch 6 oder 7, **dadurch gekennzeichnet, daß** die Bewegung (102; 152) des Führungsgestells (20; 122) in bezug auf die Spritzgießmaschine (12) jeweils entgegengesetzt zu der Bewegung (100; 150) des Handlinggerätes (14) in bezug auf das Führungsgestell (20; 122) ist.

9. Spritzgießanlage nach einem der Ansprüche 2 bis 8, **dadurch gekennzeichnet, daß** das Führungsgestell (20) in bezug auf die Spritzgießmaschine (12) reibschlüssig (52, 54, 56) gelagert ist.

10. Spritzgießanlage nach Anspruch 9, **dadurch gekennzeichnet, daß** der Reibschluß lösbar ist (58, 60).

11. Spritzgießanlage nach einem der Ansprüche 2 bis 8, **dadurch gekennzeichnet, daß** das Führungsgestell (122) in bezug auf die Spritzgießmaschine (12) mit einem Stoßdämpfer (130) abgestützt ist.

12. Spritzgießanlage nach Anspruch 11, **dadurch gekennzeichnet, daß** der Stoßdämpfer (130) mit Verstellmitteln (132, 138, 140) verbunden ist, mittels denen die Position seines Kolbens (131) verstellbar ist.

13. Spritzgießanlage nach einem der Ansprüche 1 bis 12, **dadurch gekennzeichnet, daß** die Spritzgießanlage (10; 120) eine Justiervorrichtung (70; 132, 140, 142, 144) zum Einstellen der Position des Führungsgestells (20; 122) in bezug auf die Spritzgießmaschine (12) aufweist.

14. Spritzgießanlage nach Anspruch 13, **dadurch gekennzeichnet, daß** die Justiervorrichtung (70) einen Anschlag (80) beinhaltet, der starr mit dem Führungsgestell (20) verbunden ist und an dem zumindest ein in einer definierten Position angeordnetes kraftübertragendes Element (72, 74) angreift.

15. Spritzgießanlage nach einem der Ansprüche 1 bis 14, **dadurch gekennzeichnet, daß** sie Meßmittel (144) zum Bestimmen der jeweils aktuellen relativen Position des Handlinggerätes (14) und der Spritzgießmaschine (12) aufweist.

16. Spritzgießanlage nach einem der Ansprüche 1 bis 15, **dadurch gekennzeichnet, daß** das Führungsgestell (20) beweglich an einem Tragegestell (22) befestigt ist und daß das Tragegestell (22) starr mit der Spritzgießmaschine (12) verkoppelt ist.

17. Spritzgießanlage nach einem der Ansprüche 1 bis 16, **dadurch gekennzeichnet, daß** ein Bewegungshub des Führungsgestells (20; 122) in bezug auf die Spritzgießmaschine (12) im Bereich zwischen 5 und 50 mm, bevorzugt im Bereich zwischen 10 bis 30 mm liegt.

18. Spritzgießanlage, insbesondere nach einem der Ansprüche 1 bis 17, mit einer Kunststoff-Spritzgießmaschine (12) und mit einem Handlinggerät (14) zum Zuführen und/oder Entnehmen von Werkstücken und/oder Zubehörteilen in die bzw. aus der Spritzgießmaschine (12), wobei das Handlinggerät (14) in bezug auf die Spritzgießmaschine (12) beweglich ist, **dadurch gekennzeichnet, daß** das Handlinggerät (14) einen Antrieb (18) aufweist, der einen Linearmotor (18) umfaßt.

19. Spritzgießanlage, insbesondere nach einem der Ansprüche 1 bis 18, **dadurch gekennzeichnet, daß** das Handlinggerät (14) mit einem deformierbaren Stoßaufnahmeelement (17) versehen ist.

20. Verfahren zum Steuern einer Kunststoff-Spritzgießanlage (10), die eine Spritzgießmaschine (12) und ein Handlinggerät (14) umfaßt, wobei zumindest ein Greifwerkzeug (16) des Handlinggerätes (14) zum Zuführen und/oder Entnehmen von Werkstücken und/oder Zubehörteilen in einen Bereich der Spritzgießmaschine (12) eingefahren wird und wobei das Handlinggerät (14) zu diesem Zweck beweglich an einem mit der Spritzgießmaschine verkoppelten Führungsgestell (20; 122) befestigt ist, **dadurch gekennzeichnet, daß** das Führungsgestell (20; 122) in bezug auf die Spritzgießmaschine (12) beweglich gelagert wird und daß das Führungsgestell (20; 122) in seinen Bewegungen (38, 102; 152) in bezug auf die Spritzgießmaschine (12) gebremst wird.

21. Verfahren nach Anspruch 20, **dadurch gekennzeichnet, daß** das Führungsgestell (20; 122) nach einem Durchlauf eines Bewegungszyklus des Handlinggerätes (14) mittels einer Justiervorrichtung (70; 131, 132, 138) neu in bezug auf die Spritzgießmaschine (12) positioniert wird.

22. Verfahren nach Anspruch 21, **dadurch gekennzeichnet, daß** das Führungsgestell (20) in seinen Bewegungen (38, 102) in bezug auf die Spritzgießmaschine (12) reibschlüssig gebremst wird (52, 54, 56) und daß der Reibschluß zum Positionieren des Führungsgestells (20) gelöst wird (58, 60).

23. Verfahren nach Anspruch 21, **dadurch gekennzeichnet, daß** das Führungsgestell (20) in seinen Bewegungen (38, 152) in bezug auf die Spritzgießmaschine (12) mittels eines Stoßdämpfers (130) gebremst wird und daß zum Positionieren des Führungsgestells (20) ein Kolben (142) des Stoßdämpfers (130) verstellt wird (132, 138, 140).

24. Verfahren nach Anspruch 20, **dadurch gekennzeichnet, daß** eine aktuelle relative Position des Handlinggerätes und der Spritzgießmaschine zueinander mit Hilfe eines Meßmittels (144) bestimmt wird und daß die Ein- und Ausfahrbewegung des Handlinggerätes in Abhängigkeit der bestimmten aktuellen relativen Position gesteuert wird.

## Claims

1. Injection molding unit for plastic material, comprising an injection molding machine (12) for plastic material and a handling apparatus (14) for supplying and/or withdrawing pieces and/or fittings into respectively from the injection molding machine (12), the handling apparatus (14) being movably fastened to a guide frame (20; 122) and the guide frame (20; 122) being coupled to the injection molding machine (12),
**characterized in that** the guide frame (20; 122) is movably disposed with reference to the injection molding machine (12).

2. Injection molding unit according to claim 1,
**characterized in that** the guide frame (20; 122) is disposed damped opposite the injection molding machine (12) by means of an energy-absorbing element (50; 130).

3. Injection molding unit according to claim 2,
**characterized in that** the damping of the energy-absorbing element (50; 130) is variable (58, 60; 132, 138, 140).

4. Injection molding unit according to any of the claims 1 to 3,
**characterized in that** the guide frame (20; 122) has with reference to the injection molding machine (12) at least the same degrees of freedom (38, 40, 100, 102; 150, 152) as the handling apparatus (14) with reference to the guide frame (20; 122).

5. Injection molding unit according to any of the claims 1 to 4,
**characterized in that** the movement (40, 100; 150) of the handling apparatus (14) is extended about transversally to the injection molding machine (12).

6. Injection molding unit according to any of the claims 1 to 5,
**characterized in that** the movement (38, 102; 152) of the guide frame (20; 122) is with reference to the injection molding machine (12) approximately collinear to the movement of the handling apparatus (14).

7. Injection molding unit according to claim 6,
**characterized in that** the movement (38, 102; 152) of the guide frame (20; 122) is with reference to the injection molding machine (12) on an axis equal to the movement of the handling apparatus (14).

8. Injection molding unit according to claim 6 or 7,
**characterized in that** the movement (102; 152) of the guide frame (20; 122) is with reference to the injection molding machine (12) respectively opposite the movement (100; 150) of the handling apparatus (14) with reference to the guide frame (20; 122).

9. Injection molding unit according to any of the claims 2 to 8,
**characterized in that** the guide frame (20) is with reference to the injection molding machine (12) disposed by friction engagement (52, 54, 56).

10. Injection molding unit according to claim 9,
**characterized in that** the friction engagement (58, 60) is releasable.

11. Injection molding unit according to any of the claims 2 to 8,
**characterized in that** the guide frame (122) is supported with respect to the injection molding machine (12) by a shock absorber (130).

12. Injection molding unit according to claim 11,
**characterized in that** the shock absorber (130) is connected with adjusting means (132, 138, 140) by means of which the position of its piston (131 ) is adjustable.

13. Injection molding unit according to any of the claims 1 to 12,
**characterized in that** the injection molding unit (10;120) has an adjusting device (70; 132, 140, 142, 144) for adjusting the position of the guide frame (20; 122) with reference to the injection molding machine (12).

14. Injection molding unit according to claim 13,
**characterized in that** the adjusting device (70) comprises a stop (80) which is rigidly connected to the guide frame (20) and on which at least one power-transmitting element (72,74) engages which is arranged in a defined position.

15. Injection molding unit according to any of the claims I to 14,
**characterized in that** it has measuring means (144) for defining the respective actual relative position of the handling apparatus (14) and the injection molding machine (12).

16. Injection molding unit according to any of the claims 1 to 15,
**characterized in that** the guide frame (20) is fastened movably to a carrier frame (22) and that the carrier frame (22) is coupled rigidly to the injection molding machine (12).

17. Injection molding unit according to any of the claims 1 to 16,
**characterized in that** a movement stroke of the guide frame (20; 122) is with reference to the injection molding machine (12) in the range between 5 and 50 mm, preferably in the range between 10 and 30 mm.

18. Injection molding unit, especially according to any of the claims 1 to 17,
comprising an injection molding machine (12) for plastic material and a handling apparatus (14) for supplying and/or withdrawing pieces and/or fittings into resp. from the injection molding machine (12); the handling apparatus (14) being movable with respect to the injection molding machine (12),
**characterized in that** the handling apparatus (14) has a drive (18) which comprises a linear motor (18).

19. Injection molding unit,
especially according to any of the claims 1 to 18,
**characterized in that** the handling apparatus (14) is provided with a deformable push-absorbing element (17).

20. Method for controlling an injection molding unit (10) for plastic material comprising an injection molding machine (12) and a handling apparatus (14),
wherein at least one gripping tool (16) of the handling apparatus (14) for supplying and/or withdrawing of pieces and/or fittings is moved into an area of the
injection molding machine (12) and wherein the handling apparatus (14) is movably fastened for this purpose to a guide frame (20;122) coupled to the injection molding machine,
**characterized in that** the guide frame (20; 122) is disposed movably with reference to the injection molding machine (12) and that the guide frame (20; 122) is braked in its movements (38,102; 152) with reference to the injection molding machine (12).

21. Method according to claim 20,
**characterized in that** the guide frame (20; 122) is positioned anew after a passage of a motion cycle of the handling apparatus (14) by means of an adjustment device (70; 131, 132, 138) with reference to the injection molding machine (12).

22. Method according to claim 21,
**characterized in that** the guide frame (20) is stopped in its movements (38,102) with reference to the injection molding machine (12) by friction engagement (52,54,56) and that the friction engagement is released (58,60) for positioning the guide frame (20).

23. Method according to claim 21,
**characterized in that** the guide frame (20) is stopped in its movements (38,152) with reference to the injection molding machine (12) by means of a shock absorber (130) and that for positioning the guide frame (20) a piston (142) of the shock absorber (130) is adjusted (132, 138, 140).

24. Method according to claim 20,
**characterized in that** an occurring relative position of the handling apparatus and the injection molding unit to each other is detected by a measuring means (144) and that the moving in and moving out of the handling apparatus is controlled dependent on the definite occurring relative position.

## Revendications

1. Dispositif de moulage par injection de matière plastique, avec une presse d'injection de matière plastique (12) et un appareil de manutention (14) destiné à introduire des pièces et/ou accessoires dans la presse d'injection (12) et/ou à les en extraire, l'appareil de manutention (14) étant monté mobile sur un châssis de guidage (20, 122) et ledit châssis de guidage (20, 122) étant couplé à la presse d'injection (12), **caractérisé en ce que** le châssis de guidage (20 ; 122) est monté mobile par rapport à la presse d'injection (12).

2. Dispositif de moulage par injection selon la revendication 1, **caractérisé en ce que** le châssis de guidage (20 ; 122) est couplé avec amortissement à la presse d'injection (12) au moyen d'un élément absorbant l'énergie (50 ; 130).

3. Dispositif de moulage par injection selon la revendication 2, **caractérisé en ce que** l'amortissement de l'élément absorbant l'énergie (50 ; 130) est variable (58, 60 ; 132 ; 138 ; 140).

4. Dispositif de moulage par injection selon l'une des revendications 1 à 3, **caractérisé en ce que** le châssis de guidage (20 ; 122) possède au moins les mêmes degrés de liberté (38, 40, 100, 102 ; 150, 152) par rapport à la presse d'injection (12) que l'appareil de manutention (14) par rapport au châssis de guidage (20 ; 122).

5. Dispositif de moulage par injection selon l'une des revendications 1 à 4, **caractérisé en ce que** le mouvement (40, 100 ; 150) de l'appareil de manutention (14) est sensiblement transversal à la presse d'injection (12).

6. Dispositif de moulage par injection selon l'une des revendications 1 à 5, **caractérisé en ce que** le mouvement (38, 102 ; 152) du châssis de guidage (20 ; 122) par rapport à la presse d'injection (12) et le mouvement de l'appareil de manutention (14) sont sensiblement colinéaires.

7. Dispositif de moulage par injection selon la revendication 6, **caractérisé en ce que** le mouvement (38, 102 ; 152) du châssis de guidage (20, 122) par rapport à la presse d'injection (12) et le mouvement de l'appareil de manutention (14) sont coaxiaux.

8. Dispositif de moulage par injection selon la revendication 6 ou 7, **caractérisé en ce que** le mouvement (102 ; 152) du châssis de guidage (20 ; 122) par rapport à la presse d'injection (12) est chaque fois opposé au mouvement (100 ; 150) de l'appareil de manutention (14) par rapport au châssis de guidage (20 ; 122).

9. Dispositif de moulage par injection selon l'une des revendications 2 à 8, **caractérisé en ce que** le châssis de guidage (20) est accouplé par friction (52, 54, 56) à la presse d'injection (12).

10. Dispositif de moulage par injection selon la revendication 9, **caractérisé en ce que** l'accouplement par friction est débrayable (58, 60).

11. Dispositif de moulage par injection selon l'une des revendications 2 à 8, **caractérisé en ce que** le châssis de guidage (122) s'appuie à la presse d'injection (12) par l'intermédiaire d'un amortisseur (130).

12. Dispositif de moulage selon la revendication 11, **caractérisé en ce que** l'amortisseur (130) est relié à des moyens de réglage (132, 138, 140) permettant de régler la position de son piston (131).

13. Dispositif de moulage par injection selon l'une des revendications 1 à 12, **caractérisé en ce que** le dispositif de moulage par injection (10 ; 120) comporte un dispositif d'ajustage (70 ; 132, 140, 142, 144) permettant de régler la position du châssis de guidage (20 ; 122) par rapport à la presse d'injection (12).

14. Dispositif de moulage par injection selon la revendication 13, **caractérisé en ce que** le dispositif d'ajustage (70) comporte une butée (80) reliée rigidement au châssis de guidage (20) et coopérant avec le ou les éléments de transmission de force (72, 74) agencés dans une position définie.

15. Dispositif de moulage par injection selon l'une des revendications 1 à 14, **caractérisé en ce qu'**il comporte des moyens de mesure (144) permettant de déterminer la position relative instantanée de l'appareil de manutention (14) par rapport à la presse d'injection (12).

16. Dispositif de moulage par injection selon l'une des revendications 1 à 15, **caractérisé en ce que** le châssis de guidage (20) est monté mobile sur un châssis support (22) et **en ce que** le châssis support (22) est couplé de manière rigide à la presse d'injection (12).

17. Dispositif de moulage par injection selon l'une des revendications 1 à 16, **caractérisé en ce qu'**une course du châssis de guidage (20 ; 122) par rapport à la presse d'injection (12) est comprise entre 5 et 50 mm, et de préférence entre 10 et 30 mm.

18. Dispositif de moulage par injection, en particulier selon l'une des revendications 1 à 17, avec une presse d'injection de matière plastique (12) et un appareil de manutention (14) destiné à introduire des pièces et/ou accessoires dans la presse d'injection (12) et/ou à les en extraire, ledit appareil de manutention (14) étant mobile par rapport à la presse d'injection (12), **caractérisé en ce que** l'appareil de manutention (14) comporte un dispositif d'entraînement (18) doté d'un moteur électrique linéaire (18).

19. Dispositif de moulage par injection, en particulier selon l'une des revendications 1 à 18, **caractérisé en ce que** l'appareil de manutention (14) est doté d'un pare-chocs déformable (17).

20. Procédé de commande d'un dispositif de moulage par injection de matière plastique (10) comprenant une presse d'injection (12) et un appareil de manutention (14), au moins un outil de préhension (16) de l'appareil de manutention (14) étant engagé pour introduire des pièces et/ou accessoires dans une région de la presse d'injection (12) et/ou pour les en extraire, l'appareil de manutention (14) étant à cet effet monté mobile sur un châssis de guidage (20 ; 122) couplé à la presse d'injection, **caractérisé en ce que** le châssis de guidage (20 ; 122) est monté mobile par rapport à la presse d'injection (12) et **en ce que** le châssis de guidage (20 ; 122) est freiné dans ses déplacements (38, 102 ; 152) par rapport à la presse d'injection (12).

21. Procédé selon la revendication 20, **caractérisé en ce qu'**après écoulement d'un cycle de mouvement de l'appareil de manutention (14), le châssis de guidage (20 ; 122) est repositionné par rapport à la presse d'injection (12) au moyen d'un dispositif d'ajustage (70 ; 131, 132, 138).

22. Procédé selon la revendication 21, **caractérisé en ce que** le châssis de guidage (20) est freiné par friction dans ses déplacements (38, 102) par rapport à la presse d'injection (12) et **en ce que** l'accouplement par friction est supprimé (58, 60) pour permettre le positionnement du châssis de guidage (20).

23. Procédé selon la revendication 21, **caractérisé en ce que** le châssis de guidage (20) est freiné dans ses déplacements (38, 152) par rapport à la presse d'injection (12) au moyen d'un amortisseur (130) et **en ce qu'**un piston (142) de l'amortisseur (130) est déplacé (132, 138, 140) pour permettre le positionnement du châssis de guidage (20).

24. Dispositif selon la revendication 20, **caractérisé en ce que** la position relative instantanée de l'appareil de manutention par rapport à la presse d'injection est déterminée à l'aide d'un moyen de mesure (144) et **en ce que** les mouvements d'introduction et de retrait de l'appareil de manutention sont commandés en fonction de la position relative instantanée relevée.
